# EUROPEAN PATENT SPECIFICATION

(11) **EP 3 125 594 B1**
(45) Date of publication and mention of the grant of the patent: **01.01.2020**
(21) Application number: 14889488.4
(22) Date of filing: 28.09.2014
(51) Int. Cl.: H04W 76/10, H04L 29/06, H04W 12/06

(54) **INTELLIGENT COMMUNICATION METHOD AND TERMINAL**
INTELLIGENTES KOMMUNIKATIONSVERFAHREN UND ENDGERÄT
PROCÉDÉ DE COMMUNICATIONS INTELLIGENTES ET TERMINAL

(30) Priority: 16.04.2014 CN 201410152546
(43) Date of publication of application: 01.02.2017
(73) Proprietor: Huawei Technologies Co., Ltd., Longgang District Shenzhen, Guangdong 518129 (CN)
(72) Inventor: KANG, Jiao, Shenzhen Guangdong 518129 (CN); MA, Qifeng, Shenzhen Guangdong 518129 (CN)
(74) Representative: Epping - Hermann - Fischer
(86) International application number: PCT/CN2014/087634
(87) International publication number: WO 2015/158114

(56) References cited:
- EP-A2- 0 766 902
- CN-A- 101 031 154
- CN-A- 102 547 685
- CN-A- 102 868 665
- CN-A- 103 957 522

## Description

### TECHNICAL FIELD

The present invention relates to the field of communications technologies, and in particular, to an intelligent communications method, terminal, and system.

### BACKGROUND

Nowadays, with popularization and development of mobile intelligent terminals, when using a mobile intelligent terminal, a user has a conventional communication demand; moreover, in daily life and work, the user depends on many terminal applications (applications such as map, navigation, weather forecast, microblog, WeChat, Email, and SMS message) installed on the mobile intelligent terminal.

In the prior art, a conventional voice channel and a third-party application data channel are independent of each other and are operated separately. The conventional voice channel and the third-party application data channel use different "point-to-point addressing" mechanisms. In conventional voicing, a mobile terminal number is used as a feature code for addressing, to determine a calling party/a called party. For a third-party application, registration information of respective users of a sending party and a receiving party is used to determine the sending party/the receiving party. In addition, the conventional voice channel is used to transmit only voice data between the calling party and the called party. For file transfer, identity authentication, image sharing, and the like, operations can be performed only by using the third-party application to perform transmission between the sending party and the receiving party. Therefore, if a voice call and service data transmission need to be implemented simultaneously, at least two local applications need to be enabled on a mobile intelligent terminal. That is, a voice channel is established by using a mobile terminal number, and when the voice channel is established, authentication and login are performed by using a user identity of a third-party application. Only in this way, can the voice call and the service data transmission be implemented simultaneously. However, consequently, system architecture of a terminal is complex, steps of interaction between a mobile terminal and a network are cumbersome, and multiple authentications are required.

EP 0 766 902 A2 discloses a user authentication method and apparatus. Authorization for a user to use a service is provided by a modified pager which calculates a unique response code to a transmitted challenge code based on the challenge code, an input personal identification number, and an internal key. The response code is input to a simple terminal, such as a telephone, and if the unique response code is acceptable, the user may access the desired service, such as cashless transactions or long distance phone service.

### SUMMARY

Embodiments of the present invention provide intelligent communications methods and terminals, which avoids cumbersome multiple authentications in the prior art and more effectively uses a voice call channel that has already been established.

To achieve the foregoing objective, the following technical solutions are used in the embodiments of the present invention:
According to a first aspect, a first terminal for implementing intelligent communication is provided, where there is a voice channel, established by using a circuit switched domain, between the first terminal and a second terminal, and the first terminal includes:
a generation unit, configured to generate a feature code of the first terminal, and generate, based on the feature code, a voice packet, where the voice packet includes the feature code; a first sending unit, configured to send the voice packet to the second terminal by using the voice channel; a second sending unit, configured to send the feature code of the first terminal to a server, for security authentication, where the security authentication is completed by the server based on the feature code of the first terminal and a received feature code of the second terminal; and a processing unit, configured to establish a data link channel between the first terminal and the second terminal after the security authentication succeeds;
wherein when both the data link channel and the voice channel are established between the first terminal and the second terminal, and the first terminal sends service data to the second terminal, the first terminal further comprises:
   a determining unit, configured to determine whether the service data is greater than a preset threshold, where:
   if the determining unit determines that the service data is greater than the preset threshold, the second sending unit sends the service data to the second terminal by using the data link channel between the first terminal and the second terminal; or if the determining unit determines that the service data is less than or equal to the preset threshold, the service data is encoded according to an encoding rule to obtain a voice packet transmittable on the voice channel, and the first sending unit sends the voice packet to the second terminal by using the voice channel.

According to a second aspect, an intelligent communication method, wherein there is a voice channel, established by using a circuit switched domain, between a first terminal and a second terminal, and the method includes:
generating, by the first terminal, a feature code of the first terminal, and generating a voice packet according to the feature code, wherein the voice packet comprises the feature code;
sending, by the first terminal, the voice packet to the second terminal by using the voice channel;
sending, by the first terminal, the feature code of the first terminal to a server, for security authentication, wherein the security authentication is completed by the server based on the feature code of the first terminal and a received feature code of the second terminal; and
establishing, by the first terminal, a data link channel between the first terminal and the second terminal after the security authentication succeeds;
wherein when both the data link channel and the voice channel are established between the first terminal and the second terminal, and the first terminal sends service data to the second terminal, the method further comprises:
   determining, by the first terminal, whether the service data is greater than a preset threshold, wherein:
   if the service data is greater than the preset threshold, the service data is sent to the second terminal by using the data link channel between the first terminal and the second terminal; or if the service data is less than or equal to the preset threshold, the service data is encoded according to an encoding rule to obtain a voice packet transmittable on the voice channel, and the voice packet is sent to the second terminal by using the voice channel.

According to the intelligent communications methods and terminals provided in the embodiments of the present invention, when implementing a voice call, a mobile terminal can perform synchronization transmission of service data. For example, in a voice call process,
crucial information (such as, location information or personal identity information) may be carried, and emotion expression (such as pros, cons, or emotion reminding) may be further added in the voice call process. In this way, voice communication is directly converted into an instant message mode, so as to achieve seamless integration between a voice and a message, which facilitates effective communication mode in a special case, also simplifies steps of interaction between a terminal system architecture and a mobile terminal network, and avoids repeated authentication.

### BRIEF DESCRIPTION OF DRAWINGS

FIG. 1 is a schematic diagram of a mobile networking structure for implementing intelligent communication according to an embodiment of the present invention;
FIG. 2 is a schematic diagram of an apparatus of a first terminal for implementing intelligent communication according to an embodiment of the present invention;
FIG. 3 is a schematic diagram of an apparatus of another first terminal for implementing intelligent communication according to an embodiment of the present invention;
FIG. 4 is a schematic diagram of an apparatus of still another first terminal for implementing intelligent communication according to an embodiment of the present invention;
FIG. 5 is a schematic diagram of an apparatus of yet another first terminal for implementing intelligent communication according to an embodiment of the present invention;
FIG. 6 is a schematic flowchart of an intelligent communication method according to an embodiment of the present invention;
FIG. 7 is a schematic flowchart of another intelligent communication method according to an embodiment of the present invention;
FIG. 8 is a schematic flowchart of still another intelligent communication method according to an embodiment of the present invention;
FIG. 9 is a schematic flowchart of an intelligent communication method according to an embodiment of the present invention;
FIG. 10 is a schematic flowchart of yet another intelligent communication method according to an embodiment of the present invention;
FIG. 11 is a schematic structural diagram of an intelligent communications system according to an embodiment of the present invention;
FIG. 12 is a schematic diagram of an apparatus of a first terminal according to another embodiment of the present invention; and
FIG. 13 is a schematic diagram of an apparatus of a first terminal according to still another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

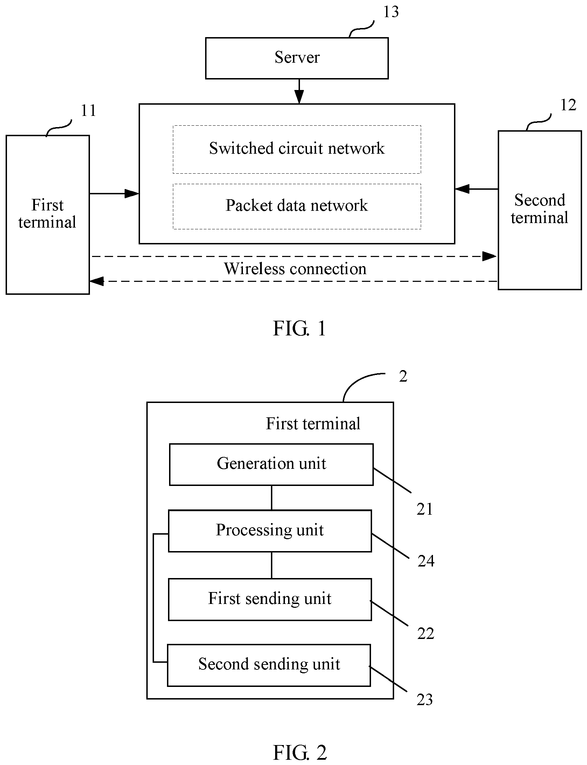

FIG. 1 is a schematic diagram of a mobile networking structure for implementing intelligent communication on a mobile communication network. The mobile communication network may be a 2G (2nd Generation Partnership Project, The Second Generation, 2G for short) or a 3G (3rd Generation Partnership Project, The Third Generation Partnership Project, 3G for short) network, or may be a 4G (4^{th} Generation Partnership Project) network or another network that can implement intelligent communication. As shown in FIG. 1, the mobile networking includes two subnets and specifically includes: a switched circuit network including a first terminal 11, a second terminal 12, and a mobile network that is provided by a carrier, and a packet data network including the first terminal 11, the second terminal 12, and a server 13. It should be noted that FIG. 1 is merely exemplary description. In actual networking, one first terminal 11 may perform voice communication and service data transmission with multiple second terminals 12.

Based on the networking structure shown in FIG. 1, an embodiment of the present invention provides two manners for implementing a method for establishing, based on a voice call, a service data channel.
Manner 1: There is a voice channel, established by using a circuit switched domain, between the first terminal 11 and the second terminal 12. When the first terminal 11 needs to establish a data link channel to the second terminal 12, after the server 13 receives a feature code of the first terminal 11 that is sent by the first terminal 11 and a feature code of the second terminal 12 that is sent by the second terminal 12, the server 13 completes security authentication according to the feature code of the first terminal 11 and the feature code of the second terminal 12, and establishes the data link channel between the first terminal 11 and the second terminal 12, so that the first terminal 11 transmits, by using the data link channel, service data needed to be transmitted to the second terminal 12.
Manner 2: There is a voice channel, established by using a circuit switched domain, between the first terminal 11 and the second terminal 12. When the first terminal 11 needs to establish a data link channel to the second terminal 12, the first terminal 11 sends a feature code of the first terminal 11 to the second terminal 12 by using the voice channel, so that the second terminal 12 can extract, from the first feature code, a necessary element for a second feature code of the second terminal; and then the first terminal 11 performs security authentication on the second terminal according to the first feature code and the second feature code. After the authentication succeeds, the data link channel is established between the first terminal 11 and the second terminal 12 in a wireless connection mode (such as a P2P direct network connection, a Wireless Fidelity (Wireless-Fidelity, WIFI) connection, or a Bluetooth connection), so that the first terminal 11 transmits, by using the data link channel, service data needed to be transmitted to the second terminal 12.

Based on the foregoing description, it can be learned that in both the foregoing two manners, that is, manner 1 and manner 2, a voice call and synchronization transmission of service data are implemented by establishing a data link channel between a first terminal and a second terminal. In addition, the present invention further provides a third manner in which the voice channel between the first terminal 11 and the second terminal 12 is directly used to transmit service data. Manner 3: There is a voice channel, established by using a circuit switched domain, between the first terminal 11 and the second terminal 12. The first terminal 11 encodes, according to an encoding rule, service data needed to be transmitted to obtain a voice packet transmittable on the voice channel, and sends the voice packet to the second terminal 12 by using the voice channel, so that the second terminal 12 decodes the voice packet to obtain the service data.

Other embodiments of the present invention further involve a solution implemented according to a preset threshold for a service data amount and with reference to manner 1 and manner 3 or with reference to manner 2 and manner 3.

As shown in FIG. 2, an embodiment of the present invention provides a first terminal for implementing intelligent communication. The first terminal is mainly applied to a scenario in which there is a voice channel, established by using a circuit switched domain, between the first terminal and a second terminal and in which the first terminal needs to establish a data link channel to the second terminal. Specifically, the first terminal 2 includes: a generation unit 21, a first sending unit 22, and a second sending unit 23.

The generation unit 21 is configured to generate a feature code of the first terminal, and generate, based on the feature code, a voice packet, where the voice packet includes the feature code.

Constitution of the feature code of the first terminal includes a random code and one or more of the following elements: a user ID (Identity, identity) of the first terminal or a user ID of the second terminal. The random code is generated by the first terminal when the feature code needs to be generated. The user ID of the first terminal and the user ID of the second terminal are pre-stored on the first terminal, or are obtained when the user ID of the first terminal and the user ID of the second ID are entered for dialing. The first terminal and the second terminal that are mentioned in this embodiment may be wired or wireless electronic devices with a communication function, such as smartphones or palmtop computers.

The first sending unit 22 is configured to send the voice packet to the second terminal by using the voice channel, so that the second terminal parses the voice packet to obtain a feature code of the second terminal. The second sending unit 23 is configured to send, to a server, the feature code of the first terminal that is generated by the generation unit 21.

The second sending unit 23 completes, by using a signaling channel between the first terminal and the server, sending of the feature code of the first terminal.

A processing unit 24, configured to complete security authentication according to the feature code of the first terminal and the feature code of the second terminal, and establish the data link channel between the first terminal and the second terminal, where the security authentication is completed based on the feature code of the first terminal and the feature code of the second terminal that is sent by the second terminal.

Constitution of the feature code of the second terminal includes the random code and one or more of the following elements: the user ID of the first terminal or the user ID of the second terminal. The random code in the feature code of the first terminal is the same as the random code in the feature code of the second terminal.

The user ID of the first terminal and the user ID of the second terminal may be mobile subscriber numbers (Mobile Subscriber International ISDN/PSTN Number, MSISDN).

According to the first terminal provided in this embodiment of the present invention, there is a voice channel, established by using a circuit switched domain, between the first terminal and a second terminal, and when the first terminal needs to establish a data link channel to the second terminal, after a server completes security authentication according to a feature code of the first terminal and a feature code of the second terminal, the server establishes the data link channel between the first terminal and the second terminal, so that the first terminal can send, by using the data link channel, service data needed to be transmitted to the second terminal, and the mobile terminals can implement establishment of the data link channel by using the voice channel and complete service data transmission. In this way, voice communication is directly established into an instant message mode, so as to achieve seamless integration between a voice and a message, which facilitates effective communication mode in a special case, also simplifies steps of interaction between a terminal system architecture and a mobile terminal network, and avoids repeated authentication.

In this embodiment, when the first sending unit 22 sends the feature code of the first terminal by using the voice channel, the processing unit 24 generally packs the feature code as a GSM voice data packet, then loads the data packet in a specified location of a normal voice packet by means of wavelet transform, and sends the normal voice packet to the second terminal. After receiving the data packet, the second terminal parses the related packet according to an agreed location, to obtain the feature code that is sent by the first terminal.

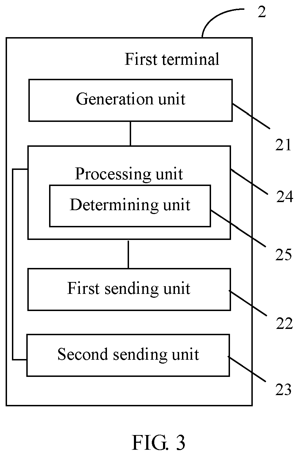

Optionally, when both the data link channel and the voice channel are established between the first terminal and the second terminal, and the first terminal sends service data to the second terminal, as shown in FIG. 3, the processing unit 24 further includes a determining unit 25.

The determining unit 25 is configured to determine whether the service data is greater than a preset threshold.

The service data may be input by a user by using the first terminal, or may be read from a file stored on the first terminal, or may be input based on another sensor or apparatus.

If the determining unit 25 determines that the service data is greater than the preset threshold, the second sending unit 23 sends the service data to the second terminal by using the data link channel between the first terminal and the second terminal.

If the determining unit 25 determines that the service data is less than or equal to the preset threshold, the first sending unit 22 encodes the service data according to an encoding rule to obtain a voice packet transmittable on the voice channel, and sends the voice packet to the second terminal by using the voice channel. After receiving the voice packet, the second terminal decodes the voice packet to obtain the service data.

Exemplarily, to avoid unnecessary waste of network resources, service data needed to be transmitted may be screened herein. When the service data is less than the preset threshold, it indicates that the service data is relatively small, and a packet data network resource does not need to be wasted. The service data may be directly packed as a data packet that is similar to a Global System for Mobile Communications (Global System for Mobile communication, GSM) voice. Then the data packet is loaded into a normal voice by means of wavelet transform and is sent to the second terminal, or can be transmitted in a wireless connection mode (such as a P2P network, Bluetooth, WIFI). Correspondingly, when the service data is greater than the preset threshold, it indicates that the service data is relatively large. To ensure that the service data can be transmitted successfully, the data link channel that has already been established is used to perform transmission. Preferably, a process for establishing the data link channel in this embodiment may be performed only when it is determined that the service data needed to be transmitted is greater than the preset threshold.

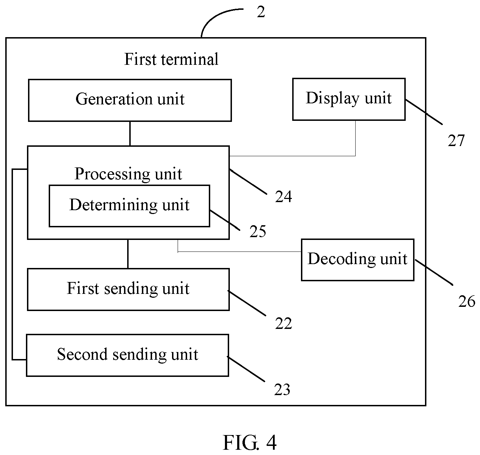

Optionally, as shown in FIG. 4, when the first terminal receives, on the voice channel, service data of the second terminal, the processing module 24 further includes: a decoding unit 26 and a display unit 27.

The decoding unit 26 is configured to: after the voice packet that carries the service data of the second terminal is received on the voice channel, decode the voice packet to obtain the service data that is sent by the second terminal.

The display unit 27 is configured to display the service data of the second terminal that is obtained by means of decoding by the decoding unit 26.

Further, optionally, the display unit 27 is specifically configured to transfer, according to a type of the service data of the second terminal, the service data to a corresponding application on the first terminal, for displaying.

Exemplarily, when the first terminal receives, on the voice channel, the service data of the second terminal, that is, when the first terminal is a receive end, after receiving the service data sent by the second terminal, the first terminal may display the service data according to the service data type of the service data; or may invoke a local third-party application client. For example, third-party map software is invoked to display user location information, or third-party image player software is invoked to display a shared image.

In this embodiment, in a manner of implementing establishment of a data link channel by using a voice channel, a random code way is considered. However, in specific implementation, some existing well-known encryption algorithms may be further used for implementation, and details are not described herein.

In this embodiment of the present invention, unit division of the first terminal is exemplarily described. In practice, there may be multiple division methods for units that constitute the first terminal in this embodiment of the present invention.

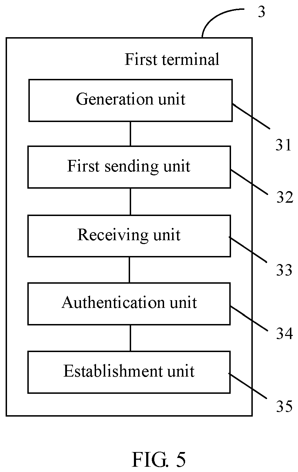

An embodiment of the present invention provides a first terminal for implementing intelligent communication. As shown in FIG. 5, the first terminal is mainly applied to a scenario in which there is a voice channel, established by using a circuit switched domain, between the first terminal and a second terminal and in which the first terminal needs to establish a data link channel to the second terminal. Specifically, the first terminal 3 includes: a generation unit 31, a first sending unit 32, a receiving unit 33, an authentication unit 34, and an establishment unit 35. For ease of description, in this embodiment, a feature code of the first terminal is referred to as a first feature code for short, and a feature code of the second terminal is referred to as a second feature code for short.

The generation unit 31 is configured to generate the first feature code of the first terminal and transfer the first feature code to the first sending unit 32, and is further configured to generate a voice packet according to the first feature code, where the voice packet includes the first feature code.

The first sending unit 32 is configured to send the voice packet to the second terminal by using the voice channel.

The receiving unit 33 is configured to receive the second feature code of the second terminal that is returned by the second terminal by using the voice channel.

The authentication unit 34 is configured to perform security authentication on the second terminal according to the first feature code generated by the generation unit 31 and the second feature code received by the receiving unit 33.

Constitution of the first feature code of the first terminal includes a user ID of the first terminal and a first random code. The feature code of the second terminal includes a user ID of the second terminal and a second random code.

Optionally, the authentication unit 34 is specifically configured to: after the second feature code of the second terminal is received, verify whether the first feature code of the first terminal that is generated by the generation unit 31 and the second feature code of the second terminal that is received by the receiving unit 33 meet a security authentication condition, and if meet, confirm that the authentication succeeds, where the security authentication condition includes: the random code carried in the received second feature code is the same as the random code included in the first feature code.

Exemplarily, the authentication unit 34 is specifically configured to: when it is confirmed that the second random code is the same as the first random code and that the user ID of the second terminal is the same as a user ID of a peer end of the data link channel needed to be established by the first terminal currently, confirm that the security authentication for the second terminal succeeds.

The establishment unit 35 is configured to establish the data link channel between the first terminal and the second terminal in a wireless connection mode after the authentication performed by the authentication unit 34 succeeds.

If the wireless connection mode includes a P2P network connection mode, a WIFI connection mode, or a Bluetooth connection mode, the voice packet that carries the first feature code further carries related information that is used for establishing the wireless connection mode. Specifically, for example, an identifier of the wireless connection mode, protocol version information.

According to the first terminal provided in this embodiment of the present invention, when there is a voice channel, established by using a circuit switched domain, between the first terminal and a second terminal, and the first terminal needs to establish a data link channel to the second terminal, the first terminal establishes a data link channel between the first terminal and the second terminal in a wireless connection mode according to a first feature code of the first terminal and a second feature code of the second terminal, so that the first terminal can send, by using the data link channel, service data needed to be transmitted to the second terminal, and then the mobile terminals can implement establishment of the wireless connection mode by using the voice channel.

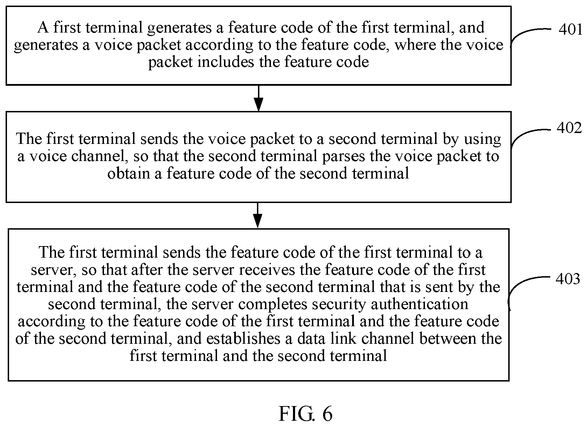

FIG. 6 shows an intelligent communication method according to an embodiment of the present invention, where the method may be implemented by any one of the first terminals shown in FIG. 1 to FIG. 4. This embodiment is mainly applied to a scenario in which there is a voice channel, established by using a circuit switched domain, between a first terminal and a second terminal and in which the first terminal needs to establish a data link channel to the second terminal, and is mainly targeted for a process in which a server establishes the data link channel between the first terminal and the second terminal according to a feature code of the first terminal and a feature code of the second terminal. Specifically, the intelligent communication method specifically includes the following steps:
401. The first terminal generates the feature code of the first terminal, and generates a voice packet according to the feature code, where the voice packet includes the feature code.

Constitution of the feature code of the first terminal includes a first random code and one or more of the following elements: a user ID of the first terminal or a user ID of the second terminal. The first random code is temporarily generated by the first terminal when the first random code needs to be used. The user ID of the first terminal and the user ID of the second terminal are stored on the first terminal. The first terminal and the second terminal that are mentioned in this embodiment may be wired or wireless electronic devices with a communication function, such as smartphones or palmtop computers.

402. The first terminal sends the voice packet to the second terminal by using the voice channel, so that the second terminal parses the voice packet to obtain the feature code of the second terminal.

Exemplarily, when sending the feature code of the first terminal to the second terminal by using the voice channel, the first terminal generally packs the feature code as a data packet that is similar to a GSM voice, then loads the data packet in a specified location of a normal voice by means of wavelet transform, and sends the normal voice to the second terminal. After receiving the data packet, the second terminal parses the related packet according to a location that is agreed in advance, to generate the feature code sent by the first terminal.

Specifically, when packing the feature code, the first terminal may first convert the feature code into special audio information, then encode, in a voice encoding mode, the special audio information into the data packet that is similar to the GSM voice, and finally load the data packet in the specified location of the normal voice and send the data packet to the second terminal. The special audio information may be obtained by encoding the feature code according to a pre-defined rule, such as a character-audio comparison table. For example, an English letter, data, and a special character are represented by using corresponding special audio. During parsing, the second terminal may obtain, in direct comparison with a local audio library of the second terminal, the feature code by means of restoration; or may use an amplitude law for audio analysis, and use a special amplitude law to carry the feature code, so that the second terminal parses the special audio information according to a preset amplitude law to generate the feature code; or may use a special audio processing means to directly convert a to-be-transmitted feature code into audio, and overlap the audio to a conventional voice signal, so that the second terminal directly parses the special audio information to obtain the feature code.

It can be learned from the foregoing disclosed content that a feature code is transmitted by using a voice channel that, for implementation of manner 3 in which the voice channel is used to transmit service data and that is proposed at the beginning of the present invention, reference may be made to corresponding implementation, and details are not described herein.

Optionally, step 402 specifically includes the following content: the first terminal generates, according to an encoding rule and the feature code, a voice packet transmittable on the voice channel; and after receiving the voice packet, the second terminal decodes the voice packet to obtain the feature code that is used as the feature code of the second terminal.

Constitution of the feature code of the second terminal includes a second random code and one or more of the following elements: the user ID of the first terminal or the user ID of the second terminal.

Exemplarily, when obtaining, by the second terminal, the feature code of the first terminal that is sent by the first terminal, the feature code may be directly used as the feature code of the second terminal and be sent to the server, so that after the server receives the feature code that is sent by the first terminal and the feature code that is sent by the second terminal, and verifies that the received feature code of the first terminal and the received feature code of the second terminal meet a security authentication condition, the server confirms that the authentication succeeds, where the security authentication condition includes: the random code carried in the received second feature code is the same as the random code included in the first feature code; or when receiving the feature code of the first terminal, the second terminal may obtain the identity ID of the second terminal, and generate the feature code of the second terminal according to the identity ID of the second terminal and the random code in the feature code of the first terminal, so that after the server receives the feature code of the first terminal and the feature code of the second terminal, the server performs identity verification according to the user ID of the first terminal in the feature code of the first terminal, performs identity authentication according to the user ID of the second terminal in the feature code of the second terminal, and completes, according to that the random code carried in the feature code of the first terminal is the same as the random code carried in the feature code of the second terminal, security authentication for establishment of the data link channel.

403. The first terminal sends the feature code of the first terminal to the server, so that after the server receives the feature code of the first terminal and the feature code of the second terminal that is sent by the second terminal, the server completes security authentication according to the feature code of the first terminal and the feature code of the second terminal, and establishes the data link channel between the first terminal and the second terminal.

Optionally, step 403 specifically includes the following steps:
403a. The first terminal sends the feature code of the first terminal to the server, so that after the server receives the feature code, the server completes identity verification for the first terminal, and establishes a first data link between the first terminal and the server.
403b. After the server completes establishment of a second data link to the second terminal, the first terminal establishes, based on the first data link and the second data link, the data link channel between the first terminal and the second terminal.

Optionally, when both the data link channel and the voice channel are established between the first terminal and the second terminal, the first terminal sends service data to the second terminal, and before step 403 or after step 403, 404a, 404b1, and 404b2 are further included. A solution implemented when 404a is performed before step 403 is to obtain the service data first, and then determine, according to a bigger-or-smaller relationship between the service data and a threshold, whether the data link channel needs to be established to complete transmission. A solution implemented when 404a is performed after step 403 is to establish the data link channel first, and then select one channel from the voice channel and the data link channel according to the bigger-or-smaller relationship between the service data and a threshold to perform transmission. 404a. The first terminal determines whether the service data is greater than a preset threshold.

The service data includes but is not limited to: an image, text, user location information, user identity information, multi-media information, and the like Specifically, if the service data is greater than the preset threshold, proceed to step 404b1; or if the service data is less than or equal to the preset threshold, proceed to step 404b2.

404b1. If the service data is greater than the preset threshold, the service data is sent to the second terminal by using the data link channel between the first terminal and the second terminal.

Exemplarily, after obtaining service data needed to be transmitted, the first terminal sends the service data to the server by using the first data link between the first terminal and the server. After receiving the service data, the server confirms, according to a feature code of a receive end (that is, the feature code of the second terminal) that is sent by the first terminal, that the second terminal is a receiving party, and then sends the service data to the second terminal by using the second data link between the second terminal and the server.

404b2. If the service data is less than or equal to the preset threshold, the service data is encoded according to an encoding rule to obtain a voice packet transmittable on the voice channel, and the voice packet is sent to the second terminal by using the voice channel, so that the second terminal decodes the voice packet to obtain the service data.

Optionally, when the first terminal receives, on the voice channel, service data of the second terminal, the method further includes:
a1. After receiving, on the voice channel, a voice packet that carries the service data of the second terminal, the first terminal decodes the voice packet in an audio decoding mode that is agreed in advance, to obtain the service data sent by the second terminal.
a2. The first terminal displays the service data of the second terminal that is obtained by means of decoding.

Optionally, step a2 specifically includes: the service data is transferred, according to a type of the service data of the second terminal, to a corresponding application on the first terminal, for displaying. Exemplarily, the first terminal displays the service data according to the service data type of the service data; or may invoke a local third-party application client to display the service data. For example, third-party map software is invoked to display user location information, or third-party image player software is invoked to display a shared image.

Exemplarily, when the intelligent communication method provided in the present invention is actually applied, the following effects can be achieved: in a process of a voice call performed between a first terminal and a second terminal, important and crucial information (that is, service data) may be carried, such as user information including user location information, a phone number, a bank account, a name, an address, have an e-mail address, or an ID card number. In addition, to enhance emotion expression in the call process, information about the emotion expression (such as pros, cons, or emotion reminding) (that is, the service data) may be sent; or during the call, voice communication may be converted into an instant message mode, so as to achieve seamless integration between a voice and an instant message, which facilitates effective communication mode in a special case for users; or during the call, a session association mechanism may be started temporarily, that is, an association mechanism for sharing an image, a camera, a video, or the like is started temporarily, so that two users on the call can share information such as the image or the video during the call.

According to the intelligent communication method provided in this embodiment of the present invention, in addition to a verification code, information required for establishment of a data link channel between a first terminal and a server may be further carried in a message that is sent by the first terminal to the server, which can be implemented, based on the disclosed content of the present invention, by a person skilled in the art. However, this is not the focus of the present invention, and details are not described again.

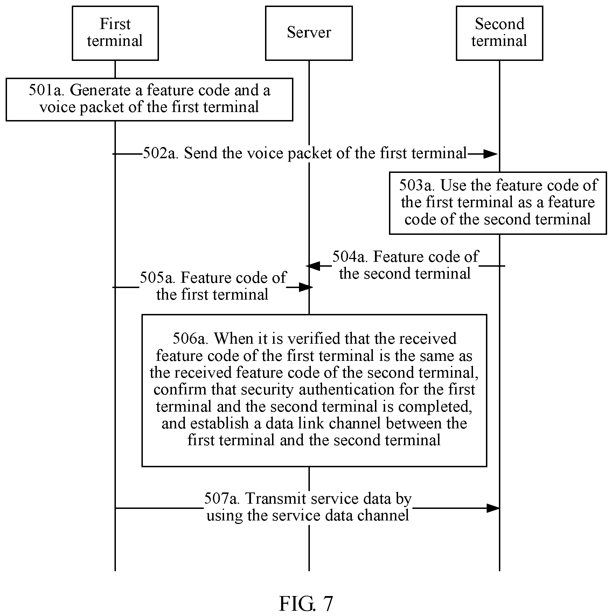

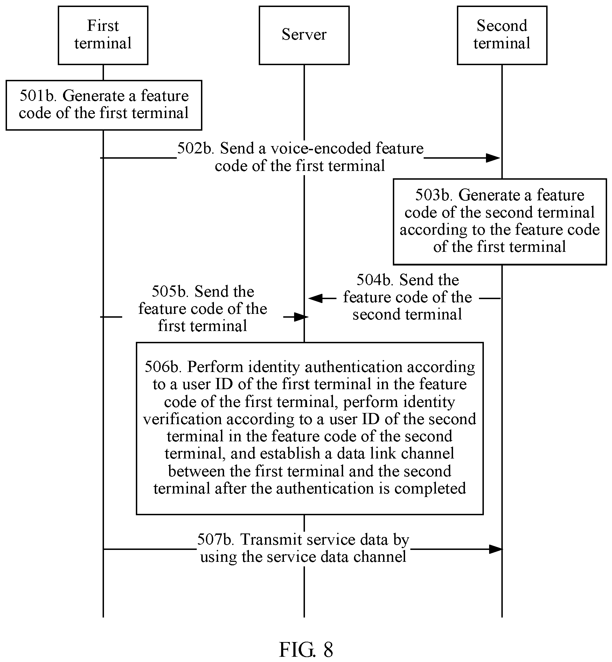

The following exemplarily describes, with reference to a specific application scenario, the intelligent communication method provided in the embodiments of the present invention. In addition, for a main description of technical terms and concepts that are related to the foregoing embodiment in the following embodiment, reference may be made to the foregoing embodiment. Exemplarily, the following embodiments are mainly applied to a scenario in which there is a voice channel, established by using a circuit switched domain, between a first terminal and a second terminal and in which the first terminal needs to establish a data link channel to the second terminal, and are mainly targeted for a process in which a server establishes the data link channel between the first terminal and the second terminal according to a feature code of the first terminal and a feature code of the second terminal. Specifically, referring to FIG. 7 and FIG. 8, the intelligent communication method is specifically described herein with reference to an actual application scenario.

According to a first intelligent communication method shown in FIG. 7, this embodiment is mainly targeted for a process in which after a server performs identity authentication on a first terminal and a second terminal by using a feature code of the first terminal and a feature code of the second terminal, the server establishes a data link channel between the first terminal and the second terminal. In addition, the feature code of the second terminal is the feature code of the first terminal that is shared by the first terminal with the second terminal by using a voice channel. Specifically, the method includes the following steps:
501a. The first terminal generates the feature code of the first terminal, and generates, based on the feature code, a voice packet, where the voice packet includes the feature code.
502a. The first terminal sends the voice packet to the second terminal by using the voice channel. Exemplarily, that the voice packet is generated based on the feature code is specifically: the first terminal packs the feature code as a data packet that is similar to a GSM voice, then loads the data packet into a normal voice by means of wavelet transform, and sends the normal voice to the second terminal.
503a. The second terminal parses the voice packet, and uses the feature code that is obtained by means of parsing as the feature code of the second terminal.
504a. The second terminal sends the feature code of the second terminal to the server by using a signaling channel between the second terminal and the server.
505a. The first terminal sends the feature code of the first terminal to the server.
506a. After the server receives the feature code of the first terminal and the feature code of the second terminal that is sent by the second terminal, and verifies that the feature code of the first terminal is the same as the feature code of the second terminal, the server confirms that security authentication for the first terminal and the second terminal is completed, and establishes the data link channel between the first terminal and the second terminal.

Optionally, when both the data link channel and the voice channel are established between the first terminal and the second terminal, the first terminal sends service data to the second terminal, and after step 506a, the method further includes:
507a. The first terminal determines whether the service data is greater than a preset threshold; and if the service data is greater than the preset threshold, sends the service data to the second terminal by using the data link channel between the first terminal and the second terminal.

Specifically, to avoid unnecessary waste of network resources, service data needed to be transmitted may be screened herein. When the service data is greater than the preset threshold, it indicates that the service data is relatively large. To ensure that the service data can be transmitted successfully, the server needs to use the data link channel between the first terminal and the second terminal. Correspondingly, when the service data is less than the preset threshold, it indicates that the service data is relatively small, and a packet data network resource does not need to be wasted. By directly using the voice channel, the service data may be packed as a data packet that is similar to a GSM voice, and is carried in a normal voice and is sent to the second terminal. Optionally, when there is a wireless connection mode between the first terminal and the second terminal, transmission may also be performed in the wireless connection mode.

According to a first intelligent communication method shown in FIG. 8, this embodiment is mainly targeted for a process in which after a server performs identity authentication on a first terminal and a second terminal by using an identity ID of the first terminal and an identity ID of the second terminal, the server establishes a data link channel between the first terminal and the second terminal. Specifically, the method includes the following steps:
501b. The first terminal generates a feature code of the first terminal, and generates, based on the feature code, a voice packet, where the voice packet includes the feature code.
   The feature code includes a random code and an identifier of the first terminal.
502b. The first terminal sends the voice packet to the second terminal by using a voice channel.
503b. After receiving the feature code of the first terminal, the second terminal uses the random code in the feature code as a random code in a feature code of the second terminal, and generates the feature code of the second terminal according to the random code and a user ID of the second terminal.
504b. The second terminal sends the generated feature code to the server by using a signaling channel between the second terminal and the server.
505b. The first terminal sends the feature code of the first terminal to the server by using a signaling channel between the first terminal and the server.
506b. After the server receives the feature code of the first terminal and the feature code of the second terminal, the server performs identity verification according to a user ID of the first terminal in the feature code of the first terminal and performs identity verification according to the user ID of the second terminal in the feature code of the second terminal; completes security authentication when it is verified that the random code in the feature code of the first terminal is the same as the random code in the feature code of the second terminal; and establishes the data link channel between the first terminal and the second terminal after the verification is completed.

Preferably, when the first terminal sends the feature code to the server, an IP address of the first terminal is carried. Optionally, data service related information (such as a size of a data packet, a priority) that is required for establishment of a data link channel may be further carried, to establish a data link channel between the first terminal and the server. A similar condition may also be applied to the second terminal, and details are not described herein.

The user IDs may be terminal numbers (for example, mobile phone numbers) of the mobile terminals. Exemplarily, when both the feature code of the first terminal and the feature code of the second terminal are mobile phone numbers, the first terminal may use an existing comet (a push technology used in a web, which can enable a server to transfer updated information to a client in real time without a need of sending a request by the client) persistent connection, so that the server uses the mobile phone number of the first terminal as a key value for the persistent connection, to establish a first data link between the first terminal and the server. Similarly, the second terminal also uses an existing comet persistent connection, so that the server uses the mobile phone number of the second terminal as a key value for the persistent connection, to establish a second data link between the second terminal and the server.

Optionally, when both the data link channel and the voice channel are established between the first terminal and the second terminal, the first terminal sends service data to the second terminal, and after step 507b, the method further includes:
508b. The first terminal determines whether the service data is greater than a preset threshold; and if the service data is greater than the preset threshold, sends the service data to the second terminal by using the data link channel between the first terminal and the second terminal.

Specifically, to avoid unnecessary waste of network resources, service data needed to be transmitted may be screened herein. When the service data is greater than the preset threshold, it indicates that the service data is relatively large. To ensure that the service data can be transmitted successfully, the server needs to use the data link channel between the first terminal and the second terminal. Correspondingly, when the service data is less than the preset threshold, it indicates that the service data is relatively small, and a packet data network resource does not need to be wasted. By directly using the voice channel, the service data may be packed as a data packet that is similar to a GSM voice, and is loaded into a normal voice and is sent to the second terminal; or may be transmitted in a wireless connection mode.

Exemplarily, after the second terminal receives, by using the data link channel between the first terminal and the second terminal, the service data sent by the first terminal, the second terminal may select a corresponding terminal application to display the service data according to a service data type of the service data; or may invoke a local third-party application client to display the service data. For example, third-party map software is invoked to display user location information, or third-party image player software is invoked to display a shared image. Exemplarily, in this embodiment, a specific procedure in which the server establishes, for the first time, the data link channel between the first terminal and the second terminal is described as follows:
509b. The first terminal sends the feature code of the first terminal to the server, after the server receives the feature code of the first terminal and the feature code of the second terminal, the server performs identity verification according to the user ID of the first terminal in the feature code of the first terminal, and after the verification is completed, establishes the first data link between the first terminal and the server.
510b. The server performs identity verification according to the user ID of the second terminal in the feature code of the second terminal, and after the verification is completed, establishes the second data link between the second terminal and the server.
511b. The first terminal sends the service data and the feature code of the second terminal to the server by using the first data link, so that the server determines, according to the random code that is shared by the first terminal with the second terminal and/or the feature code of the second terminal, that a receive end is the second terminal, and sends the service data to the second terminal by using the second data link.

Exemplarily, after the server performs identity authentication on the first terminal and the second terminal when transmitting the service data for the first time, the first terminal and the second terminal may constitute the data link channel between the first terminal and the second terminal based on the first data link, the server, and the second data link. When transmitting service data subsequently, the first terminal may directly perform transmission by using the service data channel between the first terminal and the second terminal.

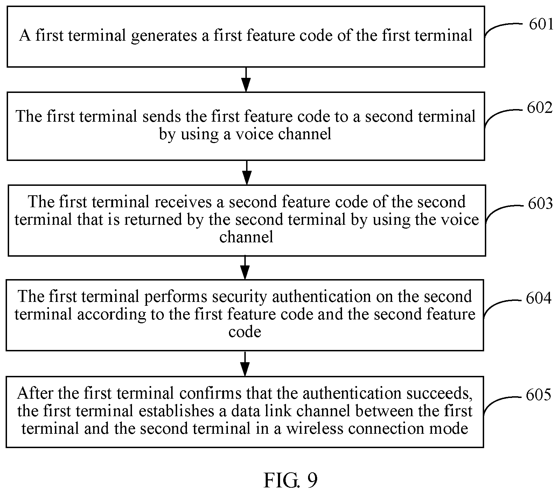

An embodiment of the present invention provides an intelligent communication method, which may be implemented by the first terminal shown in FIG. 5. This embodiment is mainly applied to a scenario in which there is a voice channel, established by using a circuit switched domain, between the first terminal and a second terminal and in which the first terminal needs to establish a data link channel to the second terminal, and is mainly targeted for a process in which the first terminal establishes the data link channel between the first terminal and the second terminal according to a feature code of the first terminal and a feature code of the second terminal. Specifically, as shown in FIG. 9, the method includes the following steps:
601. The first terminal generates a first feature code of the first terminal.

Constitution of the first feature code of the first terminal includes a user ID of the first terminal and a first random code.

602. The first terminal sends the first feature code to the second terminal by using the voice channel.

603. The first terminal receives a second feature code of the second terminal that is returned by the second terminal by using the voice channel.

Constitution of the second feature code of the second terminal includes a user ID of the second terminal and a second random code. Exemplarily, the second random code of the second terminal may be the first random code in the first feature code that is sent by the first terminal, or may be a random code that is pre-configured on the second terminal.

604. The first terminal performs security authentication on the second terminal according to the first feature code and the second feature code.

Optionally, step 604 specifically includes:
604b. When the first terminal confirms that the second random code is the same as the first random code and that the user ID of the second terminal is the same as a user ID of a peer end of the data link channel needed to be established by the first terminal currently, the first terminal confirms that the security authentication for the second terminal succeeds.
605. After the first terminal confirms that the authentication succeeds, the first terminal establishes the data link channel between the first terminal and the second terminal in a wireless connection mode.

The wireless connection mode includes but is not limited to a P2P network connection mode, a WIFI connection mode, a Bluetooth connection mode, or the like.

Optionally, after step 605, the method further includes: the first terminal determines whether service data is greater than a preset threshold. If the service data is less than the preset threshold, the service data is sent to the second terminal by using the data link channel between the first terminal and the second terminal.

Specifically, to avoid unnecessary waste of network resources, the service data may be screened herein. When the service data is less than the preset threshold, it indicates that the service data is relatively small, and a packet data network resource does not need to be wasted. Transmission needs to be performed by using the data link channel that is established between the first terminal and the second terminal in the wireless connection mode (such as a P2P network, Bluetooth, WIFI) provided shown in this embodiment. Correspondingly, when the service data is greater than the preset threshold, it indicates that the service data is relatively large. To ensure that the service data can be transmitted successfully, the server needs to establish the data link channel between the first terminal and the second terminal.

Optionally, when the first terminal receives, on the voice channel, service data of the second terminal, the method further includes:
a1. After receiving, on the voice channel, a voice packet that carries the service data of the second terminal, the first terminal decodes the voice packet to obtain the service data that is sent by the second terminal.
a2. The first terminal displays the service data of the second terminal that is obtained by means of decoding.

Optionally, step a2 specifically includes: the service data is transferred, according to a type of the service data of the second terminal, to a corresponding application on the first terminal, for displaying. Exemplarily, after receiving the voice packet of the service data that is sent by the second terminal, the first terminal decodes the voice packet to obtain the service data, and displays the service data according to the service data type of the service data; or may invoke a local third-party application client to display the service data. For example, third-party map software is invoked to display user location information, or third-party image player software is invoked to display a shared image.

Exemplarily, the first terminal encodes, according to an encoding rule, the service data into a data packet that is similar to a GSM voice and that is transmittable on the voice channel, then loads the data packet into a normal voice by means of wavelet transform, and sends the normal voice to the second terminal. Correspondingly, after receiving the data packet, the second terminal parses the related packet according to a location that is agreed in advance, to obtain the service data that is sent by the first terminal. Specifically, when packing the service data, the first terminal may first convert the service data into special audio information, then encode, in a voice encoding mode, the special audio information into the data packet that is similar to the GSM voice, and finally load the data packet into the normal voice and send the data packet to the second terminal. The special audio information may be obtained by encoding the service data according to a manually-defined rule. For example, an English letter, data, and a special character are represented by using special audio. In this way, during parsing, the second terminal may directly do restoration in direct comparison with a local audio library of the second terminal; or may use an amplitude law for audio analysis, and use a special amplitude law to carry the service data, so that the second terminal parses the special audio information according to a preset law to obtain the service data; or may use a special audio processing means to directly convert service data needed to be transmitted into audio, and overlap the audio to a conventional voice signal, so that the second terminal directly parses the special audio information to obtain the service data.

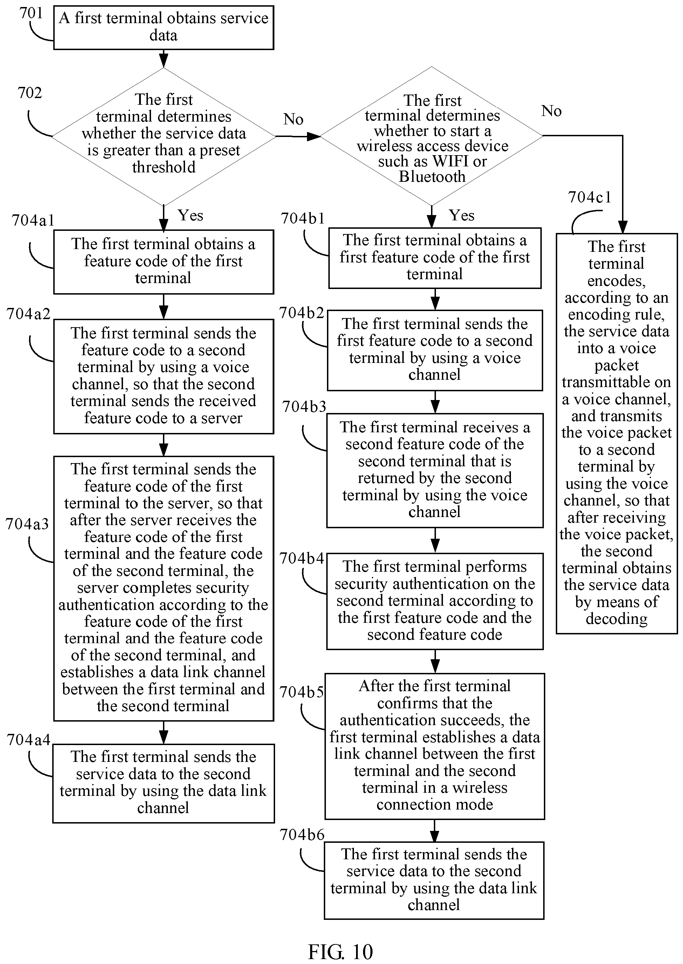

An embodiment of the present invention provides an intelligent communication method. As shown in FIG. 10, the intelligent communication method specifically includes the following steps:
701. A first terminal obtains service data.
702. The first terminal determines whether the service data is greater than a preset threshold.

If the service data is greater than the preset threshold, a data link channel passing through a server is established by performing steps 704a1 to 704a4 to implement the intelligent communication method in the present invention.

703. If the service data is less than or equal to the preset threshold, the first terminal determines whether to start a wireless access device such as WIFI or Bluetooth.

If the wireless access device is started, a data link channel between two terminals is established by performing steps 601 to 605 to implement the intelligent communication method in the present invention. If the wireless access device is not started, step 704c is performed to implement the intelligent communication method in the present invention by using a voice channel.

Steps 704al to 704a4 are shown as follows:
704a1. The first terminal obtains a feature code of the first terminal.

Constitution of the feature code of the first terminal includes one or more of the following elements: a user ID of the first terminal, a user ID of a second terminal, or a random code.

704a2. The first terminal sends the feature code to the second terminal by using the voice channel, so that the second terminal sends the received feature code to the server.

704a3. The first terminal sends the feature code of the first terminal to the server, so that after the server receives the feature code of the first terminal and the feature code of the second terminal that is sent by the second terminal, the server completes security authentication according to the feature code of the first terminal and the feature code of the second terminal, and establishes a data link channel between the first terminal and the second terminal.

Constitution of the feature code of the second terminal includes one or more of the following elements: the user ID of the second terminal or the random code.

704a4. The first terminal sends the service data to the second terminal by using the data link channel.

It should be noted that, for the content described in steps 704al to 704a4, details have been described in the embodiments corresponding to FIG. 6 and FIG. 7, and therefore details are not described herein.

Step 704c1 is shown as follows:
704c1. The first terminal encodes, according to an encoding rule, the service data into a voice packet transmittable on the voice channel, and transmits the voice packet to a second terminal by using the voice channel, so that after receiving the voice packet, the second terminal obtains the service data by means of decoding.

It should be noted that, for the content described in step 704c1, details have been described in the embodiment corresponding to FIG. 9, and therefore details are not described herein.

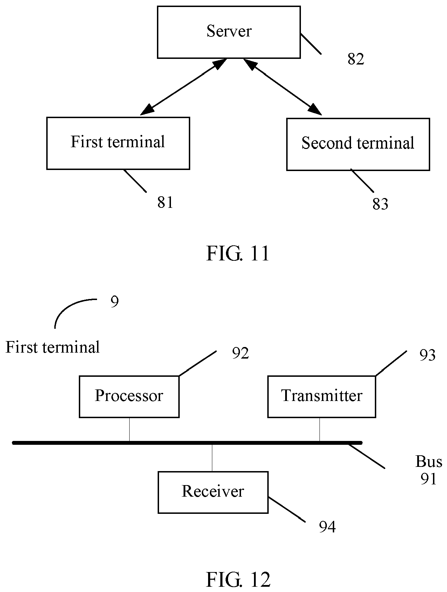

An embodiment of the present invention provides an intelligent communications system, so as to implement the intelligent communication methods provided in the embodiments shown in FIG. 6 to FIG. 8. Exemplarily, as shown in FIG. 11, the intelligent communications system includes: a first terminal 81, a server 82, and a second terminal 83. The first terminal 81 may be the first terminal shown in FIG. 2 to FIG. 4. Specifically, when there is a voice channel, established by using a circuit switched domain, between the first terminal and the second terminal, and the first terminal needs to establish a data link channel to the second terminal, functions that can be implemented by the devices in the intelligent communications system are as follows.

The first terminal 81 sends, to the server 82, a feature code that is used for security verification when the data link channel is to be established, and sends a voice-encoded feature code to the second terminal 83 by using the voice channel.

The second terminal 83 obtains the feature code of the second terminal 83 according to the received feature code of the first terminal 81.

After the server 82 receives the feature code of the first terminal 81 and the feature code of the second terminal 83 that is sent by the second terminal 83, the server 82 determines, according to the feature code of the first terminal 81 and the feature code of the second terminal 83, that the security authentication succeeds, and establishes the data link channel between the first terminal 81 and the second terminal 83.

Optionally, that the first terminal 81 sends the feature code to the second terminal 83 by using the voice channel, and that the second terminal 83 obtains the feature code of the second terminal 83 according to the received feature code of the first terminal specifically include: the first terminal 81 generates, according to an encoding rule and the feature code of the first terminal 81, a voice packet transmittable on the voice channel; and after receiving the voice packet, the second terminal 83 obtains the feature code of the first terminal by means of decoding, uses the feature code of the first terminal 81 as the feature code of the second terminal 83, and forwards the feature code of the second terminal 83 to the server 82.

Optionally, if the feature code of the first terminal 81 includes a user ID of the first terminal 81 and a random code, and the feature code of the second terminal 83 includes a user ID of the second terminal 83 and the random code, the security authentication according to the feature code of the first terminal 81 and the feature code of the second terminal 83 is determined succeed specifically includes:
when the server 82 verifies that information included in the received feature code of the first terminal 81 is the same as the random code included in the received feature code of the second terminal 83, the server 82 determines that security authentication for the first terminal 81 and the second terminal 83 succeeds; or after the server 82 receives the feature code of the first terminal 81 and the feature code of the second terminal 83, the server 82 performs identity verification according to the user ID of the first terminal 81 in the feature code of the first terminal 81, performs identity verification according to the user ID of the second terminal 83 in the feature code of the second terminal 83, and when the random code included in a verification code of the first terminal is the same as the random code included in a verification code of the second terminal, completes security authentication for establishment of the data link channel. For other features, reference is made to the method embodiments, and details are not described herein.

An embodiment of the present invention provides a first terminal, which may be configured to implement the first terminal in the embodiments shown in FIG. 2 to FIG. 4 and FIG. 6 to FIG. 8. For content such as a working mechanism of the first terminal, interaction between the first terminal and another network element, and related technical terms and concepts, reference may be made to the embodiments shown in FIG. 2 to FIG. 8 (excluding FIG. 5), and details are not described herein.

As shown in FIG. 12, the first terminal 9 includes: a bus 91, a processor 92, a transmitter 93, and a receiver 94.

The bus 91 is configured to transfer data and signaling among the transmitter, the receiver and the processor.

The processor 92 is configured to generate a feature code of the first terminal, and generate, based on the feature code, a voice packet, where the voice packet includes the feature code.

The transmitter 93 sends the voice packet to the second terminal by using the voice channel, and is further configured to send the feature code of the first terminal to a server, for security authentication.

The receiver 94 is configured to receive a message indicating that the security authentication succeeds, and the processor 92 establishes a data link channel between the first terminal and the second terminal.

For a related optional or preferable processing means related to the processor 92, reference may be made to the apparatus embodiments corresponding to FIG. 2 to FIG. 4 and the method embodiment corresponding to FIG. 6. It may be understood that corresponding module division in the apparatus embodiments in FIG. 2 to FIG. 4 is implemented based on the processor 92 and according to functions, and details are not described herein.

An embodiment of the present invention provides a first terminal, which may be configured to implement the first terminal in the embodiments shown in FIG. 5 to FIG. 9. For content such as a working mechanism of the first terminal, interaction between the first terminal and another network element, and related technical terms and concepts, reference may be made to the embodiment shown in FIG. 11, and details are not described herein.

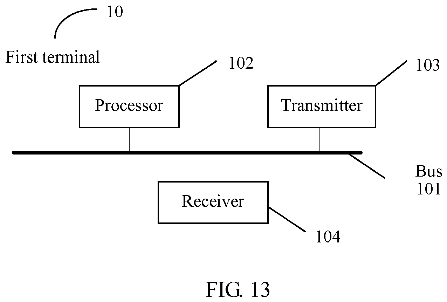

As shown in FIG. 13, the first terminal 10 includes: a bus 101, a processor 102, a transmitter 103, and a receiver 104.

The bus 101 is configured to transfer data and signaling among the transmitter, the receiver and the processor.

The processor 102 is configured to obtain a first feature code of the first terminal.

The transmitter 103 is configured to send the first feature code to a second terminal by using a voice channel.

The receiver 104 is configured to receive, by using a communications unit, a second feature code of the second terminal that is returned by the second terminal by using the voice channel.

The processor 102 is further configured to perform security authentication on the second terminal according to the first feature code and the second feature code, and establish a data link channel between the first terminal and the second terminal in a wireless connection mode after it is confirmed that the authentication succeeds.

This embodiment of the present invention provides a first terminal, which may be configured to implement the first terminal in the embodiment shown in FIG. 9. For content such as a working mechanism of the first terminal, interaction between the first terminal and another network element, and related technical terms and concepts, reference may be made to the embodiment shown in FIG. 11, and details are not described herein.

It may be clearly understood by a person skilled in the art that, for the purpose of convenient and brief description, division of the foregoing function modules is used as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the module or unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position or may be distributed on multiple network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A first terminal (2) for implementing intelligent communication, wherein there is a voice channel, established by using a circuit switched domain, between the first terminal (2) and a second terminal (12), and the first terminal (2) comprises:
a generation unit (21), configured to generate a feature code of the first terminal (2), and generate, based on the feature code, a voice packet, wherein the voice packet comprises the feature code;
a first sending unit (22), configured to send the voice packet to the second terminal (12) by using the voice channel;
a second sending unit (23), configured to send the feature code of the first terminal (2) to a server (13), for security authentication, wherein the security authentication is completed by the server (13) based on the feature code of the first terminal (2) and a received feature code of the second terminal (12); and
a processing unit (24), configured to establish a data link channel between the first terminal (2) and the second terminal (12) after the security authentication succeeds;
wherein when both the data link channel and the voice channel are established between the first terminal (2) and the second terminal (12), and the first terminal (2) sends service data to the second terminal (12), the first terminal (2) further comprises:
a determining unit (25), configured to determine whether the service data is greater than a preset threshold, wherein:
if the determining unit (25) determines that the service data is greater than the preset threshold, the second sending unit (23) sends the service data to the second terminal (12) by using the data link channel between the first terminal (2) and the second terminal (12); or if the determining unit (25) determines that the service data is less than or equal to the preset threshold, the service data is encoded according to an encoding rule to obtain a voice packet transmittable on the voice channel, and the first sending unit (22) sends the voice packet to the second terminal (12) by using the voice channel.

2. The first terminal (2) according to claim 1, wherein the generation unit (21) is specifically configured to:
generate, according to an encoding rule and the feature code of the first terminal (2), a voice packet transmittable on the voice channel, wherein after the voice packet is sent by the first sending unit (22) to the second terminal (12), the voice packet is decoded by the second terminal (12) to obtain an element for constituting the feature code of the second terminal (12).

3. The first terminal (2) according to claim 1 or 2, wherein the terminal (2) further comprises:
a receiving module, configured to receive a response that identity verification for the first terminal (2) succeeds, wherein the response is sent by the server (13);
the processing unit (24) is specifically configured to establish a first data link to the server (13) after it is confirmed that the identity verification for the first terminal (2) succeeds; and
the processing unit (24) is specifically configured to: after the receiving module receives an indication that the server (13) completes establishment of a second data link to the second terminal (12), establish, based on the first data link and the second data link, the data link channel between the first terminal (2) and the second terminal (12).

4. An intelligent communication method, wherein there is a voice channel, established by using a circuit switched domain, between a first terminal (2) and a second terminal (12), and the method comprises:
generating, by the first terminal (2), a feature code of the first terminal (2), and generating a voice packet according to the feature code, wherein the voice packet comprises the feature code;
sending, by the first terminal (2), the voice packet to the second terminal (12) by using the voice channel;
sending, by the first terminal (2), the feature code of the first terminal (2) to a server (13), for security authentication, wherein the security authentication is completed by the server (13) based on the feature code of the first terminal (2) and a received feature code of the second terminal (12); and
establishing, by the first terminal (2), a data link channel between the first terminal (2) and the second terminal (12) after the security authentication succeeds;
wherein when both the data link channel and the voice channel are established between the first terminal (2) and the second terminal (12), and the first terminal (2) sends service data to the second terminal (12), the method further comprises:
determining, by the first terminal (2), whether the service data is greater than a preset threshold, wherein:
if the service data is greater than the preset threshold, the service data is sent to the second terminal (12) by using the data link channel between the first terminal (2) and the second terminal (12); or if the service data is less than or equal to the preset threshold, the service data is encoded according to an encoding rule to obtain a voice packet transmittable on the voice channel, and the voice packet is sent to the second terminal (12) by using the voice channel.

5. The method according to claim 4, wherein the establishing a data link channel between the first terminal (2) and the second terminal (12) after the security authentication succeeds further comprises:
establishing, by the first terminal (2), a first data link to the server (13) after the server (13) receives the feature code and completes identity verification for the first terminal (2); and
when the server (13) completes establishment of a second data link to the second terminal (12), and verifies that a random code carried in the feature code of the first terminal (2) is the same as a random code carried in the feature code of the second terminal (12), establishing, by the first terminal (2), based on the first data link and the second data link, the data link channel to the second terminal (12).

6. The method according to claim 4, wherein when the first terminal (2) receives, on the voice channel, service data of the second terminal (12), the method further comprises:
after the voice packet that carries the service data of the second terminal (12) is received on the voice channel, decoding the voice packet to obtain the service data that is sent by the second terminal (12); and
displaying the service data of the second terminal (12) obtained by means of decoding.

7. The method according to claim 6, wherein the displaying the service data of the second terminal (12) obtained by means of decoding specifically comprises:
transferring, according to a type of the service data of the second terminal (12), the service data to a corresponding application on the first terminal (2), for displaying.

8. The method according to claim 6 or 7, wherein the encoding rule is specifically:
an image or text is converted according to a voice packet format, and, based on wavelet transform, is loaded onto a normal voice channel; and
parsing, by a receiving party, a voice signal according to a parsing location defined in the encoding rule, to obtain a data packet and then to obtain the sent image or text.

## Patentansprüche

1. Erstes Endgerät (2) zum Implementieren einer intelligenten Kommunikation, wobei ein mittels einer leitungsvermittelten Domain eingerichteter Sprachkanal zwischen dem ersten Endgerät (2) und einem zweiten Endgerät (12) vorhanden ist, und das erste Endgerät (2) umfasst:
eine Erzeugungseinheit (21), die dazu eingerichtet ist, einen Merkmalscode des ersten Endgeräts (2) zu erzeugen und basierend auf dem Merkmalscode ein Sprachpaket zu erzeugen, wobei das Sprachpaket den Merkmalscode umfasst;
eine erste Sendeeinheit (22), die dazu eingerichtet ist, das Sprachpaket unter Verwendung des Sprachkanals an das zweite Endgerät (12) zu senden;
eine zweite Sendeeinheit (23), die dazu eingerichtet ist, den Merkmalscode des ersten Endgeräts (2) an einen Server (13) zur Sicherheitsauthentifizierung zu senden, wobei die Sicherheitsauthentifizierung durch den Server (13) basierend auf dem Merkmalscode des ersten Endgeräts (2) und einem empfangenen Merkmalscode des zweiten Endgeräts (12) durchgeführt wird; und
eine Verarbeitungseinheit (24), die dazu eingerichtet ist, einen Datenverbindungskanal zwischen dem ersten Endgerät (2) und dem zweiten Endgerät (12) aufzubauen, nachdem die Sicherheitsauthentifizierung erfolgreich war;
wobei, wenn sowohl der Datenverbindungskanal als auch der Sprachkanal zwischen dem ersten Endgerät (2) und dem zweiten Endgerät (12) aufgebaut sind, und das erste Endgerät (2) Dienstdaten an das zweite Endgerät (12) sendet, das erste Endgerät (2) ferner umfasst:
eine Bestimmungseinheit (25), die dazu eingerichtet ist, zu bestimmen, ob die Dienstdaten größer als ein vorgegebener Schwellenwert sind, wobei:
falls die Bestimmungseinheit (25) bestimmt, dass die Dienstdaten größer als der voreingestellte Schwellenwert sind, die zweite Sendeeinheit (23) die Dienstdaten an das zweite Endgerät (12) durch Verwenden des Datenverbindungskanals zwischen dem ersten Endgerät (2) und dem zweiten Endgerät (12) sendet; oder falls die Bestimmungseinheit (25) bestimmt, dass die Dienstdaten kleiner als oder gleich dem voreingestellten Schwellenwert sind, die Dienstdaten gemäß einer Codierungsregel codiert werden, um ein auf dem Sprachkanal übertragbares Sprachpaket zu erhalten, und die erste Sendeeinheit (22) das Sprachpaket unter Verwendung des Sprachkanals an das zweite Endgerät (12) sendet.

2. Erstes Endgerät (2) nach Anspruch 1, wobei die Erzeugungseinheit (21) spezifisch dazu eingerichtet ist:
gemäß einer Codierungsregel und dem Merkmalscode des ersten Endgeräts (2) ein auf dem Sprachkanal übertragbares Sprachpaket zu erzeugen, wobei, nachdem das Sprachpaket durch die erste Sendeeinheit (22) an das zweite Endgerät (12) gesendet wurde, das Sprachpaket durch das zweite Endgerät (12) decodiert wird, um ein Element zum Bilden des Merkmalscodes des zweiten Endgeräts (12) zu erhalten.

3. Erstes Endgerät (2) nach Anspruch 1 oder 2, wobei das Endgerät (2) ferner umfasst:
ein Empfangsmodul, das dazu eingerichtet ist, eine Antwort zu empfangen, dass die Identitätsprüfung für das erste Endgerät (2) erfolgreich war, wobei die Antwort durch den Server (13) gesendet wird;
die Verarbeitungseinheit (24) spezifisch dazu eingerichtet ist, eine erste Datenverbindung zum Server (13) aufzubauen, nachdem bestätigt wurde, dass die Identitätsprüfung für das erste Endgerät (2) erfolgreich war; und die Verarbeitungseinheit (24) spezifisch dazu eingerichtet ist, nachdem das Empfangsmodul eine Anzeige erhalten hat, dass der Server (13) den Aufbau einer zweiten Datenverbindung zum zweiten Endgerät (12) abgeschlossen hat, basierend auf der ersten Datenverbindung und der zweiten Datenverbindung den Datenverbindungskanal zwischen dem ersten Endgerät (2) und dem zweiten Endgerät (12) herzustellen.

4. Intelligentes Kommunikationsverfahren, wobei ein Sprachkanal, der mittels einer leitungsvermittelten Domain aufgebaut ist, zwischen einem ersten Endgerät (2) und einem zweiten Endgerät (12) vorhanden ist, und das Verfahren umfasst:
Erzeugen eines Merkmalscodes des ersten Endgeräts (2) durch das erste Endgerät (2) und Erzeugen eines Sprachpakets gemäß dem Merkmalscode, wobei das Sprachpaket den Merkmalscode umfasst;
Senden des Sprachpakets durch das erste Endgerät (2) an das zweite Endgerät (12) unter Verwendung des Sprachkanals;
Senden des Merkmalscodes des ersten Endgeräts (2) durch das erste Endgerät (2) an einen Server (13) zur Sicherheitsauthentifizierung, wobei die Sicherheitsauthentifizierung durch den Server (13) basierend auf dem Merkmalscode des ersten Endgeräts (2) und einem empfangenen Merkmalscode des zweiten Endgeräts (12) durchgeführt wird; und
Aufbauen eines Datenverbindungskanals zwischen dem ersten Endgerät (2) und dem zweiten Endgerät (12) durch das erste Endgerät (2), nachdem die Sicherheitsauthentifizierung erfolgreich war;
wobei, wenn sowohl der Datenverbindungskanal als auch der Sprachkanal zwischen dem ersten Endgerät (2) und dem zweiten Endgerät (12) aufgebaut sind, und das erste Endgerät (2) Dienstdaten an das zweite Endgerät (12) sendet, das Verfahren ferner umfasst:
Bestimmen durch das erste Endgerät (2), ob die Dienstdaten größer als ein voreingestellter Schwellenwert sind, wobei:
falls die Servicedaten größer als der voreingestellte Schwellenwert sind, die Dienstdaten an das zweite Endgerät (12) unter Verwendung des Datenverbindungskanals zwischen dem ersten Endgerät (2) und dem zweiten Endgerät (12) gesendet werden; oder falls die Dienstdaten kleiner oder gleich dem voreingestellten Schwellenwert sind, die Dienstdaten gemäß einer Codierungsregel codiert werden, um ein auf dem Sprachkanal übertragbares Sprachpaket zu erhalten, und das Sprachpaket an das zweite Endgerät (12) unter Verwendung des Sprachkanals gesendet wird.

5. Verfahren nach Anspruch 4, wobei das Aufbauen eines Datenverbindungskanals zwischen dem ersten Endgerät (2) und dem zweiten Endgerät (12) nach der erfolgreichen Sicherheitsauthentifizierung ferner umfasst:
Aufbauen einer ersten Datenverbindung zum Server (13) durch das erste Endgerät (2), nachdem der Server (13) den Merkmalscode empfangen und die Identitätsprüfung für das erste Endgerät (2) abgeschlossen hat; und wenn der Server (13) den Aufbau einer zweiten Datenverbindung zum zweiten Endgerät (12) durchführt und verifiziert, dass ein im Merkmalscode des ersten Endgeräts (2) enthaltener Zufallscode gleich einem im Merkmalscode des zweiten Endgeräts (12) enthaltenen Zufallscode ist, Aufbauen des Datenverbindungskanals zum zweiten Endgerät (12) durch das erste Endgerät (2) basierend auf der ersten Datenverbindung und der zweiten Datenverbindung.

6. Verfahren nach Anspruch 4, wobei, wenn das erste Endgerät (2) auf dem Sprachkanal Dienstdaten des zweiten Endgeräts (12) empfängt, das Verfahren ferner umfasst:
nachdem das die Dienstdaten des zweiten Endgeräts (12) enthaltende Sprachpaket auf dem Sprachkanal empfangen wurde, Decodieren des Sprachpakets, um die durch das zweite Endgerät (12) gesendeten Dienstdaten zu erhalten; und
Anzeigen der durch Decodieren erhaltenen Dienstdaten des zweiten Endgeräts (12).

7. Verfahren nach Anspruch 6, wobei das Anzeigen der durch Decodieren erhaltenen Dienstdaten des zweiten Endgeräts (12) spezifisch umfasst:
Übertragen der Dienstdaten gemäß einem Typ der Dienstdaten des zweiten Endgeräts (12) an eine entsprechende Anwendung auf dem ersten Endgerät (2) zum Anzeigen.

8. Verfahren nach Anspruch 6 oder 7, wobei die Codierungsregel spezifisch Folgendes ist:
ein Bild oder ein Text, der gemäß einem Sprachpaketformat konvertiert und basierend auf einer Wavelet-Transformation auf einen normalen Sprachkanal geladen wird; und
Parsen eines Sprachsignals durch eine empfangende Partei gemäß einer in der Codierungsregel definierten Parsing-Position, um ein Datenpaket zu erhalten und dann das gesendete Bild oder den gesendeten Text zu erhalten.

## Revendications

1. Premier terminal (2) destiné à mettre en œuvre une communication intelligente, un canal vocal, établi en utilisant un domaine à commutation de circuits, étant présent entre le premier terminal (2) et un deuxième terminal (12), le premier terminal (2) comprenant :
une unité de génération (21), configurée pour générer un code de fonction du premier terminal (2) et générer un paquet vocal en se basant sur le code de fonction, le paquet vocal comprenant le code de fonction ;
une première unité d'envoi (22), configurée pour envoyer le paquet vocal au deuxième terminal (12) en utilisant le canal vocal ;
une deuxième unité d'envoi (23), configurée pour envoyer le code de fonction du premier terminal (2) à un serveur (13), pour une authentification de sécurité, l'authentification de sécurité étant menée à bien par le serveur (13) en se basant sur le code de fonction du premier terminal (2) et un code de fonction reçu du deuxième terminal (12) ; et
une unité de traitement (24), configurée pour établir un canal de liaison de données entre le premier terminal (2) et le deuxième terminal (12) après la réussite de l'authentification de sécurité ;
lorsque le canal de liaison de données et le canal vocal sont tous deux établis entre le premier terminal (2) et le deuxième terminal (12), et le premier terminal (2) envoie des données de service au deuxième terminal (12), le premier terminal (2) comprenant en outre :
une unité de détermination (25), configurée pour déterminer si les données de service sont supérieures à un seuil prédéfini, dans lequel :
si l'unité de détermination (25) détermine que les données de service sont supérieures au seuil prédéfini, la deuxième unité d'envoi (23) envoie les données de service au deuxième terminal (12) en utilisant le canal de liaison de données entre le premier terminal (2) et le deuxième terminal (12) ; ou, si l'unité de détermination (25) détermine que les données de service sont inférieures ou égales au seuil prédéfini, les données de service sont codées conformément à une règle de codage pour obtenir un paquet vocal pouvant être émis sur le canal vocal, et la première unité d'envoi (22) envoie le paquet vocal au deuxième terminal (12) en utilisant le canal vocal.

2. Premier terminal (2) selon la revendication 1, l'unité de génération (21) étant configurée spécifiquement pour :
générer, conformément à une règle de codage et au code de fonction du premier terminal (2), un paquet vocal pouvant être émis sur le canal vocal, et après que le paquet vocal ait été envoyé au deuxième terminal (12) par la première unité d'envoi (22), le paquet vocal étant décodé par le deuxième terminal (12) afin d'obtenir un élément pour constituer le code de fonction du deuxième terminal (12).

3. Premier terminal (2) selon la revendication 1 ou 2, le terminal (2) comprenant en outre :
un module de réception, configuré pour recevoir une réponse indiquant que la vérification d'identité pour le premier terminal (2) a réussi, la réponse étant envoyée par le serveur (13) ;
l'unité de traitement (24) est spécialement configurée pour établir une première liaison de données avec le serveur (13) après la confirmation que la vérification d'identité pour le premier terminal (2) a réussi ; et
l'unité de traitement (24) est spécialement configurée pour : après la réception par le module de réception d'une indication selon laquelle le serveur (13) a mené à bien l'établissement d'une deuxième liaison de données avec le deuxième terminal (12), établir le canal de liaison de données entre le premier terminal (2) et le deuxième terminal (12) en se basant sur la première liaison de données et la deuxième liaison de données.

4. Procédé de communication intelligente, un canal vocal, établi en utilisant un domaine à commutation de circuits, étant présent entre un premier terminal (2) et un deuxième terminal (12), et le procédé comprend :
génération, par le premier terminal (2), d'un code de fonction du premier terminal (2) et génération d'un paquet vocal en se basant sur le code de fonction, le paquet vocal comprenant le code de fonction ;
envoi, par le premier terminal (2), du paquet vocal au deuxième terminal (12) en utilisant le canal vocal ;
envoi, par le premier terminal (2), du code de fonction du premier terminal (2) à un serveur (13), pour une authentification de sécurité, l'authentification de sécurité étant menée à bien par le serveur (13) en se basant sur le code de fonction du premier terminal (2) et un code de fonction reçu du deuxième terminal (12) ; et
établissement, par le premier terminal (2), d'un canal de liaison de données entre le premier terminal (2) et le deuxième terminal (12) après la réussite de l'authentification de sécurité ;
lorsque le canal de liaison de données et le canal vocal sont tous deux établis entre le premier terminal (2) et le deuxième terminal (12), et le premier terminal (2) envoie des données de service au deuxième terminal (12), le procédé comprenant en outre :
détermination, par le premier terminal (2), si les données de service sont supérieures à un seuil prédéfini, procédé selon lequel :
si les données de service sont supérieures au seuil prédéfini, les données de service sont envoyées au deuxième terminal (12) en utilisant le canal de liaison de données entre le premier terminal (2) et le deuxième terminal (12) ; ou, si les données de service sont inférieures ou égales au seuil prédéfini, les données de service sont codées conformément à une règle de codage pour obtenir un paquet vocal pouvant être émis sur le canal vocal, et le paquet vocal est envoyé au deuxième terminal (12) en utilisant le canal vocal.

5. Procédé selon la revendication 4, l'établissement d'un canal de liaison de données entre le premier terminal (2) et le deuxième terminal (12) après la réussite de l'authentification de sécurité comprenant :
établissement, par le premier terminal (2), d'une première liaison de données avec le serveur (13) après que le serveur (13) ait reçu le code de fonction et mené à bien la vérification d'identité pour le premier terminal (2) ; et
lorsque le serveur (13) mène à bien l'établissement d'une deuxième liaison de données avec le deuxième terminal (12) et vérifie qu'un code aléatoire transporté dans le code de fonction du premier terminal (2) est le même qu'un code aléatoire transporté dans le code de fonction du deuxième terminal (12), établissement, par le premier terminal (2), du canal de liaison de données avec le deuxième terminal (12) en se basant sur la première liaison de données et la deuxième liaison de données.

6. Procédé selon la revendication 4, selon lequel, lorsque le premier terminal (2) reçoit, sur le canal vocal, des données de service du deuxième terminal (12), le procédé comprend en outre :
après la réception sur le canal vocal du paquet vocal qui transporte les données de service du deuxième terminal (12), décodage du canal vocal pour obtenir les données de service qui sont envoyées par le deuxième terminal (12) ; et
affichage des données de service du deuxième terminal (12) obtenues au moyen du décodage.

7. Procédé selon la revendication 6, selon lequel l'affichage des données de service du deuxième terminal (12) obtenues au moyen du décodage comprend spécifiquement :
transfert, conformément à un type des données de service du deuxième terminal (12), des données de service à une application correspondante du premier terminal (2) en vue de l'affichage.

8. Procédé selon la revendication 6 ou 7, la règle de codage étant spécifiquement :
une image ou un texte est converti conformément à un format de paquet vocal et, en se basant sur une transformée en ondelettes, est chargé sur un canal vocal normal ; et
analyse syntaxique, par une partie de réception, d'un signal vocal conformément à un emplacement d'analyse syntaxique défini dans la règle de codage pour obtenir un paquet de données et ensuite pour obtenir l'image ou le texte envoyé.
